Europäisches Patentamt

(19) European Patent Office

Office européen des brevets

(11) Publication number: **0 009 522**
**B1**

(12) **EUROPEAN PATENT SPECIFICATION**

(45) Date of publication of patent specification: **12.01.83**

(21) Application number: **78300441.9**

(22) Date of filing: **02.10.78**

(51) Int. Cl.³: **F 23 C 9/06, F 23 M 9/06, F 23 C 3/00, C 01 B 3/36**

(54) **A method of at least partially burning a hydrocarbon and/or carbonaceous fuel.**

(43) Date of publication of application:
**16.04.80 Bulletin 80/8**

(45) Publication of the grant of the patent:
**12.01.83 Bulletin 83/2**

(84) Designated Contracting States:
**BE CH DE FR GB NL SE**

(56) References cited:
**DE - A - 2 442 170**
**FR - A - 2 301 770**
**FR - A - 2 370 924**
**GB - A - 1 425 122**

(73) Proprietor: **Exxon Research and Engineering Company**
**P.O.Box 390 180 Park Avenue**
**Florham Park New Jersey 07932 (US)**

(72) Inventor: **Salooja, Kailash Chander**
**6 Lockstile Mead Goring-on-Thames**
**Reading Berkshire (GB)**

(74) Representative: **Somers, Harold Arnold et al,**
**ESSO Engineering (Europe) Ltd. Patents &**
**Licences Apex Tower High Street**
**New Malden Surrey KT3 4DJ (GB)**

Courier Press, Leamington Spa, England

## A method of at least partially burning a hydrocarbon and/or carbonaceous fuel.

The present invention relates to a method of at least partially burning a hydrocarbon and/or carbonaceous fuel.

In the partial or full combustion of a fuel, it is a common objective to attempt to (partially) burn the fuel as fully as possible so that the resulting (partially) burned fuel products are as free as possible from carbon and/or smoke. For example, German patent specification DE—A—2442170 describes a burner system for burning hydrocarbon oil droplets in a flame, the system comprising a tube which surrounds part of the flame including the root. During operation of the burner system, the tube rapidly attains a relatively high temperature and serves two functions, namely: (1) to prevent excessive heat loss from the flame so that oil droplets at the root vaporize more readily, and (2) to heat and vaporize fuel droplets at the periphery of the flame. The vaporized fuel droplets burn more efficiently than non-vaporized fuel droplets and the burner system produces less atmospheric pollution and unpleasant odours than it would be in the absence of the said tube surrounding the flame.

Another common objective is to attempt to (partially) burn the fuel with the smallest possible amount of air (or other combustion-supporting gas). The attainment of one of the foregoing objectives usually results in a failure to realize the other objective, since carbon or smoke formation tends to increase with a decrease in the amount of air for (part) combustion.

In the past, a great deal of effort has been spent in improving the design of burners so that the air requirement for the (part) combustion of fuel to give products of low smoke and/or carbon content has been reduced.

It has now been discovered that the amount of carbon and/or smoke generated during the (part) combustion of a fuel can be reduced by ensuring that the (part) combustion of the fuel proceeds in a flame which is at least partially confined by a combustion chamber which is designed to promote recirculation of reactive flame species in the flame rather than allowing such flame species to be quenched.

According to the present invention, there is provided a method of at least partially burning a hydrocarbon and/or carbonaceous fuel, comprising at least partially burning the fuel in a flame supplied by a burner, and laterally confining at least part of the length of the flame having the greatest cross-sectional dimensions, when not confined, in a combustion chamber having cross-sectional dimensions smaller than the cross-sectional dimensions (measured in the same cross-sectional planes) of the said part of the flame so as to reduce the cross-sectional dimensions of the flame by an amount in the range of from 1.00 to 6.35 cms, but by no more than 20% of the unconfined cross-sectional dimensions.

Preferably, the pressure drop from one end of the combustion chamber which receives the flame from the burner to the opposite end from which at least partially burned products are discharged is not more than 25.4 cms of water, more preferably less than 12.7 cms of water, still more preferably less than 10.2 cms of water. Accordingly, commercially-available burners, which may or may not be modified, may be employed in the method of the invention.

The combustion chamber may have the general form of commercially available combustion chambers, provided that the combustion chamber has cross-sectional dimensions so correlated with the cross-sectional dimensions of the flame that the cross-sectional dimensions of the flame are reduced within the limits specified herein.

It is preferred that the natural or unconfined cross-sectional dimensions (e.g. diameter) of the flame be reduced by lateral containment or confinement in the combustion chamber by from 1.25 cms or thereabouts to 6.3 cms or thereabouts, more preferably from 1.8 cms or thereabouts to 5.1 cms or thereabouts. In many cases, the reduction of the flame's cross-sectional dimensions may suitably be from 2.5 cms or thereabouts to 3.8 cms or thereabouts.

At least 50% of the natural length of the flame is preferably laterally contained or confined by the combustion chamber and more preferably 60% or more (e.g. 70%). Better improvements in combustion may be realized when the combustion chamber laterally confines the upstream part (towards the burner) rather than the downstream part of the flame. The combustion chamber may confine the flame starting from a position either at the exit from the burner or spaced downstream therefrom. It may be convenient to attach the combustion chamber to the burner or burner support.

The combustion chamber may contain at least one internal fixed baffle for promoting recirculaton of reactive species in the flame. The, or each, baffle may have any convenient form such as a refractory ring or annulus (in the case of cylindrical combustion chambers) extending inwardly from the periphery at the internal wall.

The baffle(s) should cause the smallest pressure drop which is economically acceptable for the realized improvement in combustion. For most cases, a pressure drop of up to 5.0 cms of water will be acceptable. With one baffle, the pressure drop will usually tend to be about 2.5 cms of water in most cases.

When there are two or more baffles, they should be separated by a distance equal to at least the cross-sectional dimension (e.g. diameter or equivalent) of the combustion chamber.

The location of the baffle(s) in the flame tends to influence the improvement in combustion. With one baffle, the baffle should be located preferably less than half-way down the total length of the flame from the burner, e.g. about 33% of the total flame length from the burner.

When the two baffles are employed, it is preferred that the upstream baffle is located from 25% to 33% of the length of the flame downstream of the base of the flame, e.g. at the burner, and the downstream baffle from 50% to 67% of the flame length from the flame base.

With three baffles, the location of the upstream and middle baffles is preferably in the same range as for two baffles, the downstream baffle being located within the flame at any distance downstream of the middle baffle but separated therefrom by a distance no smaller than the internal diameter (or its equivalent) of the combustion chamber.

While the combustion chamber tends to increase the length of the flame, each baffle reduces the flame length so that a shorter combustion chamber can be used to effect the same improvement in combustion. One baffle alone can reduce the flame length by up to 25%, e.g. 15 to 20%, while three baffles can reduce the flame length by up to 50%.

The invention is particularly useful in reducing the amount of air (or other oxygen-containing gas) required to eliminate, or reduce to an acceptable level, smoke and/or carbon, so that it is possible to burn relatively heavy fuel oils and solid fuels substoichiometrically to produce hot, clean reducing gas relatively efficiently. The invention may also be employed with lighter fuels, e.g. naphthas up to liquefied petroleum gas containing more than 2% of butane, and may also be employed in the combustion of any of the foregoing fuels to produce a substantially smoke- and carbon-free hot neutral (i.e. neither oxidizing nor reducing) gas useful in processes requiring inert gas blanketing and in power generation. With regard to the latter, the absence of excess air tends to reduce the formation of $SO_3$ from sulphur in the fuel whereby greater heat recovery may be effected without the risk of sulphuric acid corrosion. Moreover, the production of nitrogen oxides also tends to be reduced in the substantial absence of excess air.

The invention will now be described in connection with the production of hot, clean, reducing gases.

Hot reducing atmospheres are extensively generated for heat treatment of metals. Their far wider use in future has been forecast for injection into the bosh zone of blast furnaces and eventually for the production of raw steel by direct reduction of iron ore.

Currently reducing atmospheres are generated mostly by partial combustion of gaseous fuels — natural gas, town gas, propane/butane — in the presence of a catalyst. The operation requires a careful control of fuel and catalyst quality and maintenance of the optimum operating conditions to ensure prevention of carbon formation and deposition on the catalyst.

Much work has already been carried out on improved burner designs for minimizing carbon formation. What has now been discovered, in accordance with the invention, is that a greater reduction in carbon-forming tendency can be achieved by careful design of the characteristics of the combustion chamber in relation to the flame which burns therein. By performing the invention using a suitable combustion chamber in conjunction with a suitable burner, a highly reducing atmosphere can be generated with e.g., liquid fuels of wide compositional range, without the aid of a catalyst.

In the past, improved combustion has been sought by making modifications to the burner, and the burner modifications have been chiefly based on better mixing of the fuel and air feed and/or on the injection into the fuel-air feed of water/steam or products of combustion. In contrast, in the practice of the present invention, the combustion chamber modifications in relation to the flame are based on the discovery that increased mixing and recirculation of the flame reactants and products in the flame itself can greatly reduce carbon and/or smoke formation. Those combustion chamber design parameters which promote mixing and recirculation have been systematically investigated, and it has been found that they entail:

— optimum choice of combustion chamber diameter (or equivalent cross-sectional dimensions).

— optimum choice of chamber length.

— provision of suitable baffles in the chamber.

These features are relatively easy to realize and incorporate, and unlike burner modifications, do not require any complex and expensive subsidiary control devices.

The invention is now further described with reference to investigations, reported below, of the relevant characteristics of combustion chambers which were either unadapted or adapted and/or modified to confine the flame laterally in accordance with the invention.

In the accompanying drawings,

Figure 1 shows graphically the comparative performances of two types of burner;

Figure 2 shows graphically the influence of the internal diameter of a combustion chamber on combustion quality;

Figure 3 and 4 show graphically the influence of combustion chamber length on combustion quality for different fuels fired at the same rate;

Figure 5 shows graphically the influence of baffles on combustion quality; and

Figure 6 shows graphically the influence of baffles on the proportions of various part-combustion products.

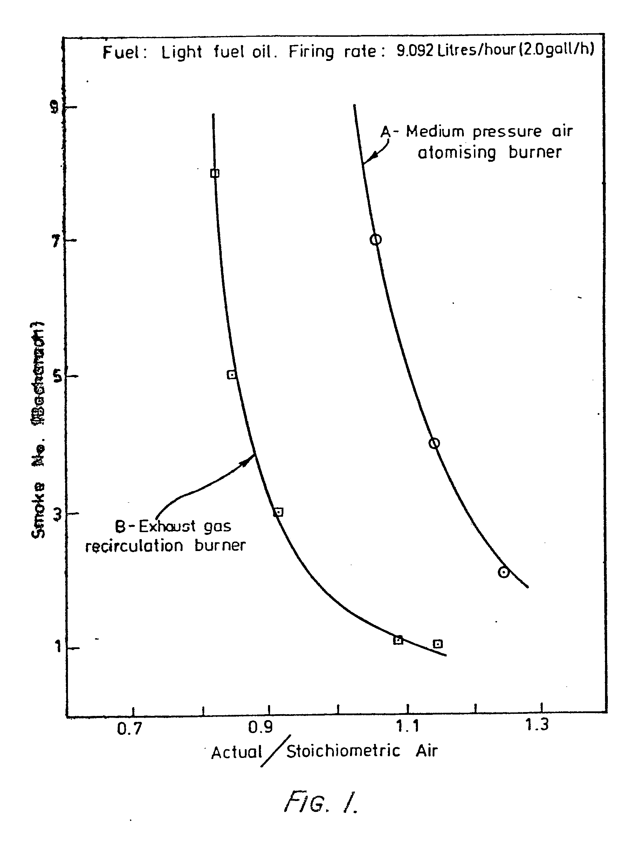

The "Smoke No. (Bacharach)" on the ordinates of the graphs of Figures 1 to 5 is the well-known smoke number as determined by the True-Spot Smoke Tester manufactured by Bacharach Industrial Instruments Company, 200 North Braddock Avenue, Pittsburgh, PA 15208, USA, on the Bacharach 10-spot oil-burner smoke scale.

The effect of combustion chamber modifications was investigated with a burner of the known type which recirculates a part of the combustion products into the fuel-air feed. This burner produces considerably less carbon than a typical medium pressure air atomizing burner. Comparative results with this burner firing light fuel oil at a rate of 9.092 litres/hour (2.0 imperial gallons/hour) into a refractory lined combustion chamber of conventional size (61 cms (24 inches) diameter and 127 cms (50 inches) long) are shown in Figure 1. Clearly, a recirculation burner (curve B) provides superior combustion relative to a medium pressure air atomized burner (curve A).

The influence of different parameters on the efficiency of combustion was investigated, as described below.

Influence of Combustion Chamber Diameter:—

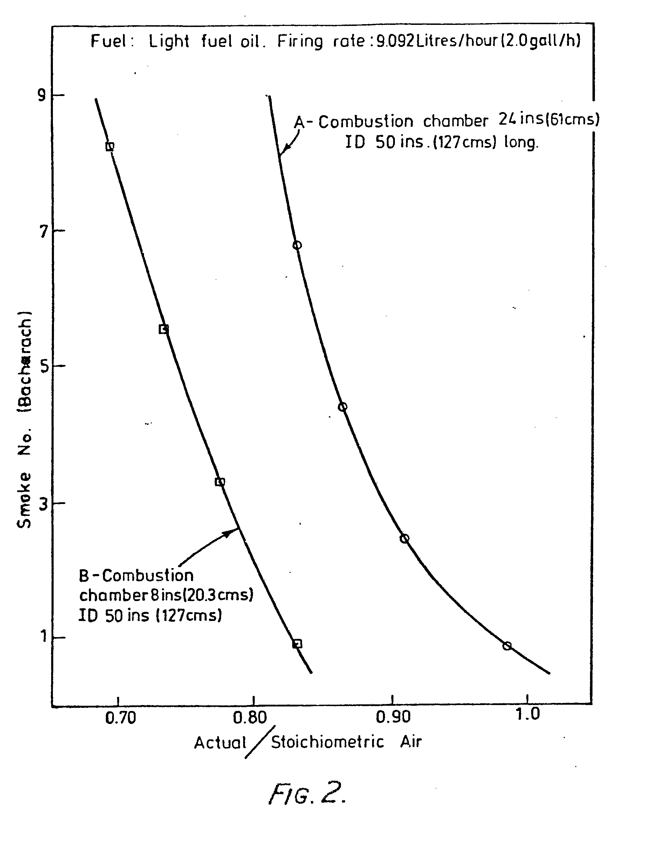

Using the exhaust gas recirculation burner referred to in connection with Figure 1, its smoke emisson performance in the 61 cms (24 inches) internal diameter combustion chamber was compared with that in a 20.3 cms (8 inches) internal diameter chamber of the same length. The narrower diameter chosen was about 2.5 cms smaller than the flame diameter at its widest. The results (Figure 2) obtained using the same fuel and firing rate as used for Figure 1 show the markedly reduced carbon forming tendency in the narrower chamber (curve B) compared with the poorer results obtained using the wider chamber (curve A).

Studies were next carried out in a still narrower 12.7 cms (15 inches) internal diameter chamber. It was noted that the flame length had become far too long to complete the combustion reactions within the 127 cms (50 inches) length of the combustion chamber.

Influence of Combustion Chamber Length:—

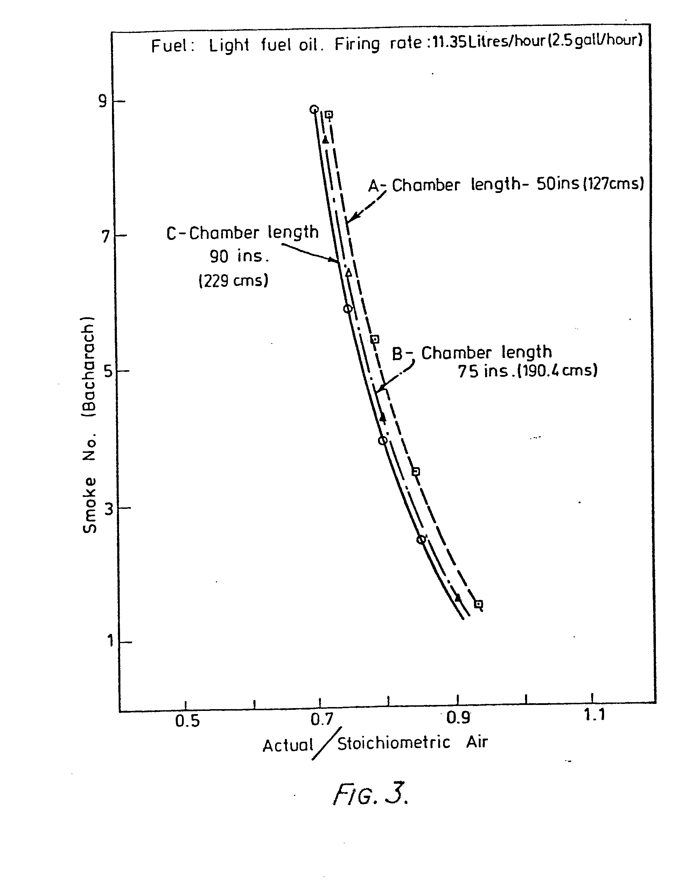

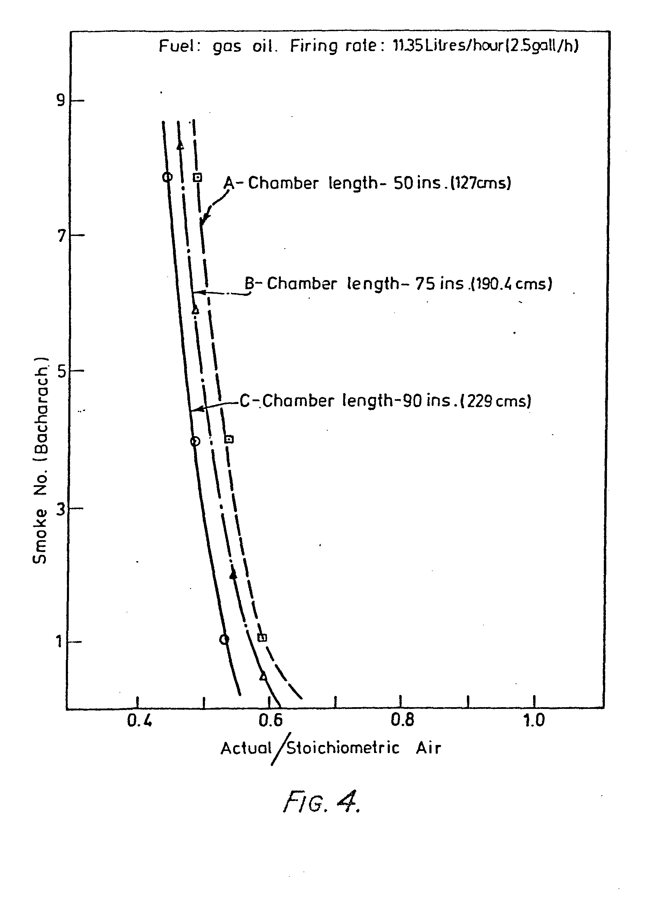

With the 20.3 cms (8 inches) internal diameter chamber, the influence of increasing the length of the combustion chamber from 127 cms (50 inches) to 190.5 cms (75 inches) and then to 228 cms (90 inches) is shown in Figure 3 for light fuel oil and in Figure 4 for gas oil, both fired at a rate of 11.35 litres/hour (2.5 imperial gallons/hour). In Figures 3 and 4, A represents the shortest chamber, B the one of intermediate length, and C the longest. It is seen that an increase in length reduces the carbon-forming tendency, although the effect is less marked than that of reducing the diameter.

Influence of Internal Baffles:—

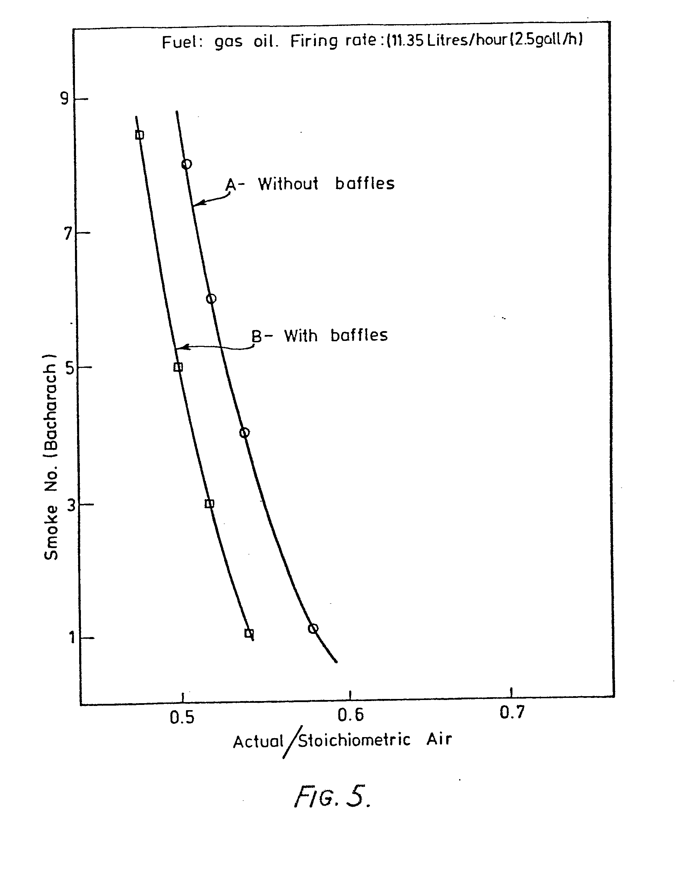

In the 20.3 cms (8 inch) internal diameter, 127 cms (50 inches) long combustion chamber, three refractory annular baffles each with a 6.35 cms (2.5 inch) hole in the centre, were spaced in the combustion chamber at 40.6 cms (16 inches), 76.2 cms (30 inches) and 122 cms (48 inches) from the burner (i.e. from the entrance to the chamber). These baffles, as shown in Figure 5 (wherein curve A is for combustion without baffles and curve B is for combustion with the baffles), considerably reduced carbon formation. The effect, in fact, is greater than of increasing the length and thus the use of baffles to enhance flame circulation provides an inexpensive way of reducing carbon forming tendency even with short combustion chambers. The results depicted in Figure 5 were obtained firing gas oil at a rate of 11.35 litres/hour (2.5 imperial gallons/hour).

It will be seen from the foregoing that smoke and/or carbon formation can be markedly reduced by reducing the chamber diameter, increasing the chamber length and by providing baffles which promote flame recirculation. Of the three factors, the effect of diameter is most marked. However, care has to be taken that the diameter is not reduced excessively — preferably by not more than 2.5 to 5.1 cms, or by not more than 20% of the diameter of the unrestricted/unconfined flame, since otherwise the resulting excessive inhibition of flame reactions and aerodynamic factors can necessitate the use of an impracticably long chamber for completion of the flame processes. For a given length constraint, carbon formation can be considerably reduced by the provision of baffles in the combustion chamber. Again care is necessary that these are not placed so closely as to inhibit the combustion processes to any significant extent. In the combustion system described by way of example, with reference to curve B of Figure 5, the position and size of baffles and the diameter of the chamber are particularly suited for maintaining a stable flame even with barely 50% of the stoichiometric air. In conventional systems stable flames are usually hard to maintain with air less than 70% of the stoichiometric.

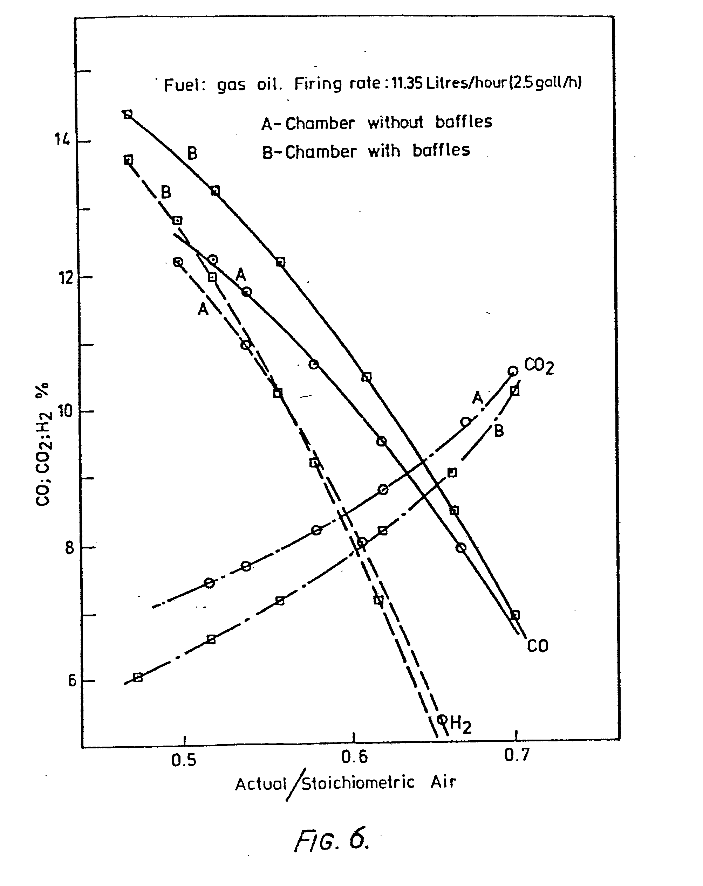

Successful completion and maintenance of the flame process with air in amounts barely 50% of the stoichiometric amount produces a highly reducing atmosphere. In Figure 6, there is shown graphically the amounts of CO, $H_2$ and $CO_2$ produced by firing gas oil at a rate of 9.092 litres/hour (2.0 imperial gallons/hour) into the two combustion chambers referred to in connection with Figure 5. Both combustion chambers were of 20.3 cms (8 inches) internal diameter and 127 cms (50 inches) long. Curves A shown the compositions of the product gases for the combustion chamber when not provided with internal baffles, and curves B show the compositions of the product gas when provided with the three radially annular baffles each having a central hole of 6.35 cms (2.5 inches) spaced at 40.6 cms (16 inches), 76.2 cms (30 inches) and 122 cms (48 inches) from the entrance to the combustion chamber, at the exit from the burner. It is clear that the recirculation of reactive flame species caused by the baffles improves the nature of the hot, reducing gas products. Moreover, as will be appreciated when the results of Figures 5 and 6 are considered together, the hot, reducing gas product obtained from the combustion chamber provided with baffles is not only richer in reducing gases and poorer in $CO_2$, but also has a lower content of carbon and/or smoke materials.

For some applications it is desirable to generate even greater amounts of CO and $H_2$ and correspondingly less of $CO_2$ and $H_2O$. This can be readily achieved by passing the product gas through a bed of incandescent coal in accordance with well known practice.

## Claims

1. A method of at least partially burning a hydrocarbon and/or carbonaceous fuel, comprising at least partially burning the fuel in a flame supplied by a burner, wherein at least part of the length of the flame is laterally confined, characterized in that the part of the length of the flame which would have the greatest cross-sectional dimensions when not confined, is confined in a combustion chamber having cross-sectional dimensions smaller than the cross-sectional dimensions (measured in the same cross-sectional planes) of the said part of the flame so as to reduce the cross-sectional dimensions of the flame by an amount in the range of from 1.00 to 6.35 cms but by no more than 20% of the cross-sectional dimensions of the unconfined flame.

2. A method according to claim 1 characterised in that the pressure drop from one end of the combustion chamber which receives the flame from the burner to the opposite end from which at least partially burned products are discharged is not more than 25.4 cms of water.

3. A method according to claim 1 or claim 2 characterised in that at least 50% of the length of the flame is laterally confined by the combustion chamber.

4. A method according to any one of claims 1 to 3 characterised in that the flame is laterally confined by the combustion chamber towards its upstream end.

5. A method according to claim 4 characterised in that the flame is laterally confined by the combustion chamber upstream to a position which is substantially in the cross-section plane of the exit of the burner.

6. A method according to any one of claims 1 to 5 characterised by comprising promoting recirculation of reactive species in the flame by means of at least one baffle in the combustion chamber and which is contacted by the flame.

7. A method according to claim 6 characterised in that the flame contacts at least two baffles in the combustion chamber, adjacent baffles being separated by a distance at least equal to the cross-sectional width of the combustion chamber.

8. A method according to claim 7 characterised in that the flame contacts at least two baffles, the upstream baffle being from 25% to 33% of the length of the flame downstream from the upstream end of the flame, and the adjacent downstream baffle being from 50% to 67% of the length of the flame from the upstream end thereof.

9. A method according to claim 6 characterised in that the flame contacts no more than one baffle at a distance less than half-way down the length of the flame from its upstream end.

10. A method according to any one of claims 1 to 9 characterised in that the fuel is burned in the combustion chamber with no more than a stoichiometric amount of combustion-supporting gas.

## Revendications

1. Procédé de combustion au moins partielle d'un combustible hydrocarboné et/ou carboné, comprenant une combustion au moins partielle du combustible dans une flamme fournie par un brûleur, dans lequel au moins une partie de la longueur de la flamme est limitée latéralement caractérisé en ce que la partie de la longueur de la flamme qui devrait avoir les plus grandes dimensions transversales à l'état non limité, est limitée dans une chambre de combustion ayant des dimensions transversales inférieures aux dimensions transversales (mesurées dans les mêmes plans de coupe) de ladite partie de la flamme, de manière à réduire les dimensions transversales de la flamme d'une quantité comprise entre 1,00 et 6,35 cm, mais ne dépassant pas 20% des dimensions transversales de la flamme non limitée.

2. Procédé selon la revendication 1, caractérisé en ce que la chute de pression d'une extrémité de la chambre de combustion qui reçoit la flamme du brûleur à l'extrémité opposée par laquelle les produits au moins partiellement brûlés sont déchargés, ne dépasse pas 25,4 cm d'eau (2,5.10³ Pa).

3. Procédé selon l'une des revendications 1 ou 2, caractérisé en ce qu'au moins 50% de la longueur de la flamme sont latéralement limités par la chambre de combustion.

4. Procédé selon l'une quelconque des revendications 1 à 3, caractérisé en ce que la flamme est latéralement limitée par la chambre de combustion versson extrémité amont.

5. Procédé selon la revendication 5, caractérisé en ce que la flamme est latéralement limitée par la chambre de combustion en amont jusqu'à une position qui est pratiquement dans le plan de coupe de la sortie du brûleur.

6. Procédé selon l'une quelconque des revendications 1 à 5, caractérisé en ce qu'il consiste à faciliter la recirculation des espèces réactives dans la flamme au moyen d'au moins une chicane dans la chambre de combustion et qui est en contact avec la flamme.

7. Procédé selon la revendication 6, caractérisé en ce que la flamme est en contact avec au moins deux chicanes dans la chambre de combustion, des chicanes adjacentes étant séparées par une distance au moins égale à la section de la chambre de combustion.

8. Procédé selon la revendication 7, caractérisé en ce que la flamme est en contact avec au moins deux chicanes, la chicane en amont étant distante de l'extrémité amont de la flamme de 25 à 33% de la longueur de la flamme en aval, et la chicane adjacente en aval étant distante de l'extrémité amont de la flamme d'une distance de 50 à 67% de la longueur de la flamme.

9. Procédé selon la revendication 6, caractérisé en ce que la flamme n'est pas en contact avec plus d'une chicane à une distance inférieure à la moitié de la longueur de la flamme à partir de son extrémité amont.

10. Procédé selon l'une quelconque des revendications 1 à 9, caractérisé en ce que le combustible est brûlé dans la chambre de combustion avec pas plus d'une quantité stoechiométrique du gaz support de la combustion.

**Patentansprüche**

1. Verfahren zur mindestens teilweisen Verbrennung eines Kohlenwasserstoffbrennstoffs und/oder eines kohlenstoffhaltigen Brennstoffs, bei dem der Brennstoff mindestens teilweise in einer von einem Brenner gelieferten Flamme verbrannt wird, wobei mindestens ein Teil der Länge der Flamme seitlich eingeengt ist, dadurch gekennzeichnet, daß der Teil der Länge der Flamme, der ohne Einengung den größten Querschnitt haben würde, durch eine Verbrennungskammer begrenzt ist, die kleinere Querschnittsabmessungen als die Querschnittsabmessungen (gemessen in denselben Querschnittsebenen) dieses Teils der Flamme aufweist und dadurch die Querschnittsabmessungen der Flamme um einen Betrag im Bereich von 1,00 bis 6,35 cm aber nicht mehr als 20 % der Querschnittsabmessungen der nicht eingeengten Flamme verringert.

2. Verfahren nach Anspruch 1, dadurch gekennzeichnet, daß der Druckabfall vom einen Ende der Verbrennungskammer, an dem die Flamme aus dem Brenner eintritt, zum anderen Ende, aus dem die zumindest teilweise verbrannten Produkte austreten, nicht mehr als 25,4 cm Wasser beträgt.

3. Verfahren nach Anspruch 1 oder 2, dadurch gekennzeichnet, daß mindestens 50 % der Länge der Flamme durch die Verbrennungskammer seitlich eingeengt werden.

4. Verfahren nach jedem der Ansprüche 1 bis 3, dadurch gekennzeichnet, daß die Flamme durc die Verbrennungskammer auf ihr stromaufwärtiges Ende zu seitlich eingeengt wird.

5. Verfahren nach Anspruch 4, dadurch gekennzeichnet, daß die Flamme durch die Verbrennungskammer stromaufwärts einer Position, die sich im wesentlichen in der Querschnittsebene des Auslasses des Brenners befindet, seitlich eingeengt ist.

6. Verfahren nach jedem der Ansprüche 1 bis 5, dadurch gekennzeichnet, daß die Rezierkulierung der reaktiven Spezies in der Flamme mittels mindestens eines Prallblechs in der Verbrennungskammer, das von der Flamme berührt wird, gefördert wird.

7. Verfahren nach Anspruch 6, dadurch gekennzeichnet, daß die Flamme mindestens zwei Prallbleche in der Verbrennungskammer berührt, wobei benachbarte Prallbleche mindestens einen Abstand voneinander haben, der der Querschnittsbreite der Verbrennungskammer entspricht.

8. Verfahren nach Anspruch 7, dadurch gekennzeichnet, daß die Flamme mindestens zwei Prallbleche berührt, wobei sich das aufstromige Prallblech 25 bis 33 % der Länge der Flamme stromabwärts vom aufstromigen Ende der Flamme und das benachbarte stromabwärtige Prallblech 50 bis 67 % der Länge der Flamme vom aufstromigen Ende der Flamme befinden.

9. Verfahren nach Anspruch 6, dadurch gekennzeichnet, daß die Flamme über eine Entfernung von weniger als der halben Länge der Flamme von ihrem aufstromigen Ende her nicht mehr als ein Prallblech berührt.

10. Verfahren nach jedem der Ansprüche 1 bis 9, dadurch gekennzeichnet, daß der Brennstoff in der Verbrennungskammer mit nicht mehr als einer stöchiometrischen Menge eines die Verbrennung unterstützenden Gases verbrannt wird.

**0 009 522**

Fuel: Light fuel oil. Firing rate: 9.092 Litres/hour (2.0 gall/h)

A- Medium pressure air atomising burner

B - Exhaust gas recirculation burner

Smoke No. (Bacharach)

Actual / Stoichiometric Air

*FIG. 1.*

1

FIG. 2.

*Fuel: Light fuel oil. Firing rate: 9.092 Litres/hour (2.0 gall/h)*

A- Combustion chamber 24 ins (61 cms) ID 50 ins. (127 cms) long.

B- Combustion chamber 8 ins (20.3 cms) ID 50 ins (127 cms)

Smoke No. (Bacharach)

Actual / Stoichiometric Air

FIG. 3.

Fuel: gas oil. Firing rate: 11.35 Litres/hour (2.5 gall/h)

A- Chamber length- 50 ins. (127 cms)

B- Chamber length- 75 ins. (190.4 cms)

C- Chamber length-90 ins. (229 cms)

Smoke No. (Bacharach.)

Actual/Stoichiometric Air

*FIG. 4.*

4

Fuel: gas oil. Firing rate : (11.35 Litres/hour (2.5gall/h)

A- Without baffles

B- With baffles

Smoke No. (Bacharach)

Actual/Stoichiometric Air

*FIG. 5.*

Fuel: gas oil. Firing rate : 11.35 Litres/hour (2.5 gall/h)

A- Chamber without baffles
B- Chamber with baffles

FIG. 6.